# EUROPÄISCHE PATENTSCHRIFT

(11) **EP 0 859 448 B1**
(45) Veröffentlichungstag und Bekanntmachung des Hinweises auf die Patenterteilung: **17.07.2002**
(21) Anmeldenummer: 98101750.2
(22) Anmeldetag: 02.02.1998
(51) Int. Cl.: H02K 5/22

(54) **Elektromotor mit aussen am Motorgehäuse angeordnetem Feststecker**
Electric motor with external connector fixed on the housing thereof
Moteur électrique avec connecteur extérieur monté sur son boîtier

(30) Priorität: 13.02.1997 DE 29702510 U
(43) Veröffentlichungstag der Anmeldung: 19.08.1998
(73) Patentinhaber: SIEMENS AKTIENGESELLSCHAFT, 80333 München (DE)
(72) Erfinder: Bellmann, Jürgen, 97080 Würzburg (DE); Hartel, Gerd, Dipl. Ing., 97276 Margetshöchheim (DE)

(56) Entgegenhaltungen:
- EP-A- 0 221 304
- EP-A- 0 655 822
- DE-A- 2 315 192
- FR-A- 1 531 915
- US-A- 4 866 317

## Beschreibung

Die Erfindung bezieht sich auf einen Elektromotor mit außen am Motorgehäuse angeordnetem Feststecker gemäß Anspruch 1; derartige Elektromotore sind insbesondere zum Einsatz in elektrischen Kupplungs-Stellantrieben bzw. automatischen Brems-Stellantrieben in Kraftfahrzeugen vorgesehen.

Durch die FR-A-15 31 915 ist ein Elektromotor mit außen am Motorgehäuse dadurch formschlüssig fixierbarem Feststecker bekannt, dass dieser mit einem Sockel in eine Öffnung des Motorgehäuses einsteckbar und verrastbar ist.

Motoren der vorgenannten Art müssen in ihrer Baugröße, insbesondere axial, kompakt sowie feuchtigkeitsdicht geschlossen und dabei als Massen-Serienprodukt fertigungs- bzw. montagetechnisch einfach aufgebaut sein; zum Anschluß elektrischer Speise- und/oder Steuerleitungen ist der Elektromotor mit einen äußeren Feststecker versehen, auf den ein, insbesondere kundenspezifischer, Anschluß-Gegenstecker mit einer bestimmten Kontaktierungskraft aufgesteckt wird.

Gemäß Aufgabe der vorliegenden Erfindung soll einerseits bei der Fertigung, insbesondere im Rahmen einer automatisierten Serienproduktion, der äußere Anschluß-Gegenstecker betriebssicher auf dem motorgehäuseseitigen Feststecker aufsteckbar und andererseits eine betriebssichere Halterung des Feststeckers in sämtlichen Betriebszuständen gewährleistbar sein.

Die Lösung der vorgenannten Aufgabe gelingt erfindungsgemäß durch die Lehre des Anspruchs 1; vorteilhafte Ausgestaltungen der Erfindung sind jeweils Gegenstand der Unteransprüche.

Durch das erfindungsgemäß vorgesehene Stützglied kann auf fertigungstechnisch einfache und gleichzeitig betriebstechnisch sichere Weise einem zu weiten Auslenken des Feststekkers und damit möglicherweise einem Schaden seiner motorseitigen Halterung sowohl beim Kontaktieren des äußeren Anschluß-Gegensteckers als auch bei betriebsmäßigen Rüttelschwingungen des Elektromotors vorgebeugt werden. In fertigungs- und montagetechnisch besonders vorteilhafter Weise ist der Feststecker an dem einen Ende des Elektromotors als einstückiges, insbesondere spritzgegossenes, Bauteil einer an dem gleichen Ende vom Motorgehäuse aufgenommenen Bürstenhalterung und das Stützglied als einstückige, insbesondere als Biegestanzteil angeformte, Stützlasche eines dieses Motorgehäuseende verschließenden Lagerschildes ausgebildet.

Die Erfindung sowie weitere vorteilhafte Ausgestaltungen der Erfindung gemäß Merkmalen der Unteransprüche werden im folgenden anhand eines schematischen Ausführungsbeispieles in der Zeichnung näher erläutert; darin zeigen:

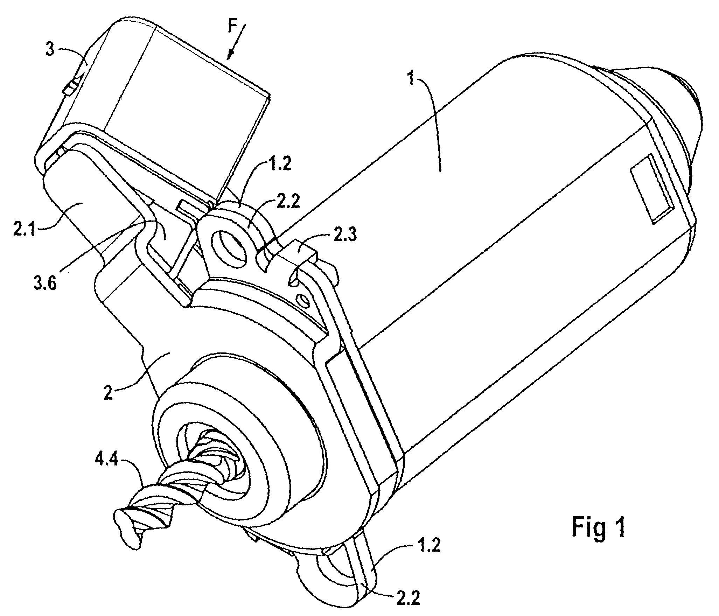

- FIG 1: in perspektivischer Darstellung die axiale Seitenansicht eines montierten Elektro-Kommutatormotors mit an seinem linken Ende angeordnetem, gegen eine Stützlasche des linken Lagerschildes abstützbaren Feststecker;

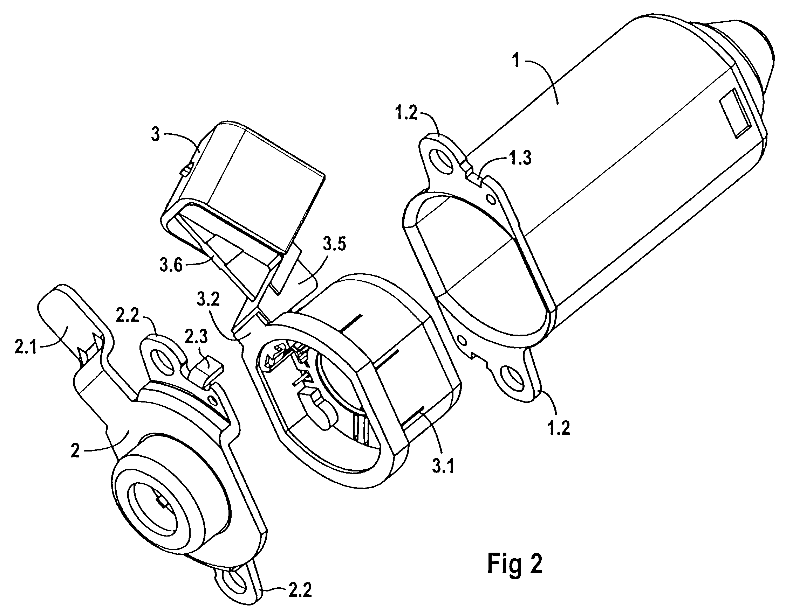

- FIG 2: den Kommutator-Elektromotor gemäß FIG 1 in perspektivischer Explosionsdarstellung

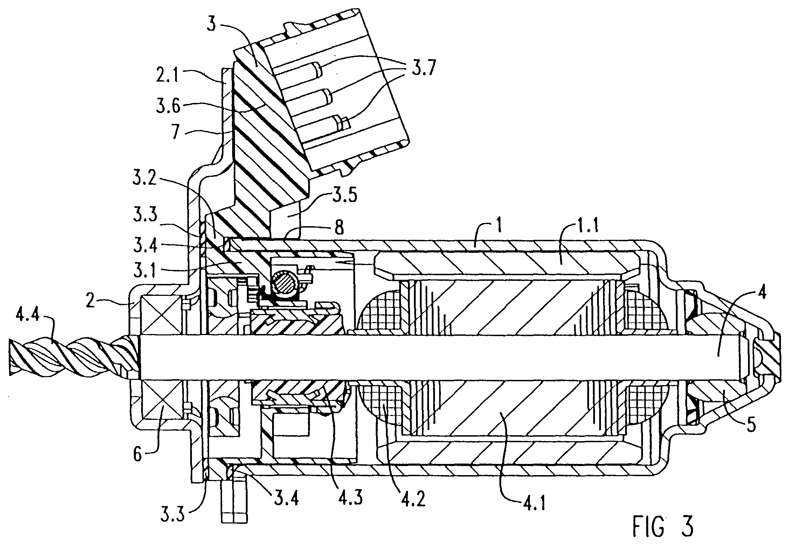

- FIG 3: den Kommutator -Elektromotor gemäß FIG 1 in einem axialen Längsschnitt;

Die Figuren zeigen als Stellmotor einen Elektromotor mit einem topfförmigen Gehäuse 1, das an seinem linken Ende durch ein Lagerschild 2 verschließbar ist. Motorgehäuse 1 bzw. Lagerschild 2 sind in ihrer gegenseitig ausgerichteten Anlage durch jeweils mit ihnen einstückige Verstemmaugen bzw. Verstemmnasen 1.3 bzw.2.3 gegenseitig formschlüssig fixierbar. Am Innenumfang des Motorgehäuses 1 sind Permanent-Erregermagnete 1.1 über den Umfang verteilt angeordnet. In einem statorseitigen rechten Kalottenlager 5 sowie in einem linken Kugellager 6 ist eine Rotorwelle 4 mit einem an dem linken Ende aus dem Lagerschild 2 herausragenden spindelförmigen Antriebswellenende 4.4 gelagert. Die Rotorwelle 4 nimmt ein Rotorblechpaket 4.1 auf, in das eine Rotorwicklung 4.2 eingebracht ist, die jeweils an einen Kommutator 4.3 angeschlossen ist. Der Kommutator 4.3 ist über ihn beschleifende, in einer Bürstenhalterung 3.1 gelagerte Bürsten an Steckerstifte 3.7 für Steuer- bzw. Stromspeiseleitungen angeschlossen, die in einem Feststecker 3 angeordnet sind. Die gesamte fertigmontierte Motoreinheit ist mittels Befestigungslaschen 1.2 bzw. 2.2 in einen Kupplungs- bzw. Bremsantrieb einbaubar.

Der Feststecker 3 ist in hier nicht näher dargestellter Weise mit einem, insbesondere kundenspezifischen, Anschluß-Gegenstecker kontaktierbar, der mit einer Kontaktierungskraft F auf den Feststecker 3 auf bzw. in den Feststecker 3 eingesteckt wird. Der Feststecker 3 ist vorteilhaft einstückig mit einer in das Motorgehäuse 1 von dessen axial offenem Ende vor der Anbringung des Lagerschildes 2 einsteckbaren Bürstenhalterung 3.1 aus Kunststoff spritzgegossen; dazu ist der Feststecker 3 über einen Verbindungshals 3.2 mit der Bürstenhalterung 3.1 verbunden. Der Verbindungshals 3.2 ist derart in eine axial stirnseitige Ausnehmung des Bürstengehäuses 1 und/oder des Lagerschildes 2 dichtend eingesteckt, daß bei Gegenanlage des Lagerschildes 2 gegen das linke stirnseitige Ende des Motorgehäuses 1 insgesamt eine feuchtigkeitsdichte Bauteileinheit entsteht. Zur Abdichtung sind dabei zweckmäßigerweise Dichtungsauflagen 3.3 bzw. 3.4 zwischen dem Verbindungshals 3.2 sowie dem Motorgehäuse 1 und dem Lagerschild 2 vorgesehen.

Um einer Beschädigung der Halterung des Feststeckers 3 bzw. des Feststeckers 3 selbst beim Aufdrücken des Anschluß-Gegensteckers mit der Kontaktierungskraft F, insbesondere durch zu große Ausweichverformungen, vorzubeugen, ist erfindungsgemäß ein Abstützglied in Form einer Abstützlasche 2.1 vorgesehen, die in fertigungs- und montagetechnisch vorteilhafter Weise radial gegenüber dem Außenumfang des Motorgehäuses 1 überstehend an den Lagerschild 2, insbesondere als Biegestanzteil bei einem metallenen Lagerschild, angeformt ist.

Zur einfacheren Zugänglichkeit des Feststeckers 3 ist dieser im spitzen Winkel schräg verlaufend zur Axialrichtung des Motorgehäuses 1 angeordnet. Zur Überbrückung eines möglichen axialen Abstandes des Feststeckers 3 gegenüber der Stützlasche 2.1 ist ein Steckerhals 3.6, vorzugsweise einstückig, an den Feststecker 3 angeformt. Nach einer weiteren vorteilhaften Ausgestaltung der Erfindung ist der Feststecker 3 über eine, ebenfalls vorzugsweise einstückig angeformte, Prellbacke 3.5 auch gegenüber dem Außenumfang des Motorgehäuses 1 derart abgestützt, daß der Feststecker 3 durch seine Halterungsanlage zwischen der Abstützlasche 2.1 einerseits und dem Motorgehäuse 1 andererseits bei betriebsmäßigen Vibrationen des Motors 1 keinen unzulässigen Rüttelbewegungen ausgesetzt ist, die zu einem Schaden seiner Fixierung am Motor, insbesondere an der Bürstenhalterung 3.1, führen könnten.

Zur weiteren Verbesserung der Rütteldämpfung ist nach einer weiteren Ausgestaltung der Erfindung vorgesehen, zwischen den Anlagen des Feststeckers 3 an der Abstützlasche 2.1 einerseits und/oder an dem Motorgehäuse 1 andererseits noch eine Dämpfungsschicht 7 bzw.8 aus spezifischem Dämpfungsmaterial vorzusehen.

## Patentansprüche

1. Elektromotor mit außen am Motorgehäuse angeordnetem Feststecker mit folgenden Merkmalen:
a) Der Feststecker (3) ist durch Anlage gegen ein motorseitiges Stützglied, insbesondere eine Stützlasche (2.1), in Gegenrichtung zu der auf ihn beim Aufstecken eines Gegensteckers ausgeübten Kontaktierungskraft (F) abstützbar;
b) der Feststecker (3) ragt im Bereich eines ein Lagerschild (2) aufnehmenden Endes eines Motorgehäuses (1) aus diesem heraus;
c) das Stützglied, insbesondere die Stützlasche (2.1), ist als radial das Motorgehäuse (1) überragender Flansch an den Lagerschild (2) angeformt.

2. Elektromotor nach dem vorhergehenden Anspruch mit dem Merkmal:
d) Das Stützglied, insbesondere die Stützlasche (2.1), ist als einstückiges Stanz-Biegeteil bzw. einstückiges Spritzgußteil des Lagerschildes (2) ausgebildet.

3. Elektromotor nach zumindest einem der vorhergehenden Ansprüche mit dem Merkmal:
e) Der Feststecker (3) ist Bestandteil einer, insbesondere als Kunststoffteil ausgebildeten, im Motorgehäuse (1) anzuordnenden Kommutatormotor-Bürstenhalterung (3.1).

4. Elektromotor nach dem vorhergehenden Anspruch mit den Merkmalen:
f) Der Feststecker (3) ist über einen Verbindungshals (3.2) einstückig mit der Bürstenhalterung (3.1) verbunden;
g) die Anschlußverbindungen zwischen der Bürstenhalterung (3.1) einerseits und dem Feststecker (3) andererseits, insbesondere zu Steckerstiften (3.7) des Feststeckers (3), sind in dem Verbindungshals (3.2) verlegt, insbesondere in diesen eingegossen.

5. Elektromotor nach dem vorhergehenden Anspruch mit dem Merkmal:
i) Der Verbindungshals (3.2) ist nach außen feuchtigkeitsdicht in eine axiale Ausnehmung des Motorgehäuses (1) und/oder des Lagerschildes (2) eingelegt.

6. Elektromotor nach einem der vorhergehenden Ansprüche 4 bzw. 5 mit dem Merkmal:
h) Der Lagerschild (2) und das diesen aufnehmende Ende des Motorgehäuses (1) sind stirnseitig unter Einschluß der Verbindung zwischen dem Feststecker (3) und der Bürstenhalterung (3.1) als nach außen feuchtigkeitsdichte Bauteileinheit miteinander verbunden.

7. Elektromotor nach zumindest einem der vorhergehenden Ansprüche mit dem Merkmal:
j) Der Feststecker (3) ist durch ein Abstützteil, insbesondere durch einen Prellbacken (3.5), im Sinne einer Vibration-Rüttelkraftbegrenzung am Motorgehäuse (1) mit Gegenanlage an dem ersten Stützglied, insbesondere der Stützlasche (2.1), abstützbar.

8. Elektromotor nach dem vorhergehenden Anspruch mit dem Merkmal:
k) Der Prellbacken (3.5) ist einstückiger Bestandteil des Feststeckers (3).

9. Elektromotor nach zumindest einem der vorhergehenden Ansprüche mit dem Merkmal:
1) Der Feststecker (3) ist jeweils unter Zwischenlage einer Dämpfungsschicht (7;8) abstützbar.

## Claims

1. An electric motor with a fixed connector arranged externally on the motor housing, having the following features:
a) the fixed connector (3) may be supported by positioning against a supporting member on the motor side, especially a supporting lug (2.1), in the opposite direction from the contacting force (F) exerted thereon during connection of a mating connector;
b) the fixed connector (3) projects out of the motor housing (1) in the area of an end thereof accommodating an end shield (2);
c) the supporting member, in particular the supporting lug (2.1), is formed on the end shield (2) as a flange projecting radially beyond the motor housing (1).

2. An electric motor according to the preceding claim, having the feature:
d) the supporting member, in particular the supporting lug (2.1), takes the form of a one-piece cut and bent part or a one-piece injection-moulded part of the end shield (2).

3. An electric motor according to at least one of the preceding claims, having the feature:
e) the fixed connector (3) is a component of a commutator motor brush holder (3.1) constructed in particular as a plastics element and for arrangement in the motor housing (1).

4. An electric motor according to the preceding claim, having the features:
f) the fixed connector (3) is connected via a connecting neck (3.2) in one piece with the brush holder (3.1);
g) the connections between the brush holder (3.1) on the one hand and the fixed connector (3) on the other hand, in particular to plug pins (3.7) of the fixed connector (3), are positioned in, in particular cast into, the connecting neck (3.2).

5. An electric motor according to the preceding claim, having the feature:
i) the connecting neck (3.2) is inserted into an axial recess in the motor housing (1) and/or the end shield (2) in such a manner as to be moisture-tight relative to the outside.

6. An electric motor according to one of the preceding claims 4 or 5, having the feature:
h) the end shield (2) and the end of the motor housing (1) accommodating it are connected together at the end, with inclusion of the connection between the fixed connector (3) and the brush holder (3.1), as a unit which is moisture-tight relative to the outside.

7. An electric motor according to at least one of the preceding claims, having the feature:
j) the fixed connector (3) may be supported against the motor housing (1) with counter-support against the first supporting member, especially the supporting lug (2.1), by a supporting element, in particular by a buffer block (3.5), so as to limit vibration force.

8. An electric motor according to the preceding claim, having the feature:
k) the buffer block (3.5) is a one-piece component of the fixed connector (3).

9. An electric motor according to at least one of the preceding claims, having the feature:
1) the fixed connector (3) may be supported with the interposition of a damping layer (7; 8).

## Revendications

1. Moteur électrique à connecteur fixe disposé extérieurement sur son boîtier, ayant les caractéristiques suivantes :
a) le connecteur (3) fixe peut, en s'appliquant contre un organe de soutien du moteur, notamment une patte (2.1) de soutien, être soutenu en direction contraire à la force (F) de mise en contact exercée sur lui lors de l'enfichage d'un connecteur complémentaire ;
b) le connecteur (3) fixe dépasse d'un boîtier (1) de moteur dans la région d'une extrémité de ce boîtier qui reçoit un flasque (2);
c) l'organe de soutien, notamment la patte (2.1) de soutien, est formé sur le flasque (2) sous forme de bride dépassant radialement du boîtier (1) de moteur.

2. Moteur électrique suivant la revendication précédente, ayant la caractéristique suivante :
d) l'organe de soutien, notamment la patte (2.1) de soutien, est réalisé sous la forme d'une partie découpée et pliée d'un seul tenant, ou encore d'une partie moulée par injection d'un seul tenant, du flasque (2).

3. Moteur électrique suivant au moins une des revendications précédentes, ayant la caractéristique suivante :
e) le connecteur (3) fixe fait partie d'un support (3.1) de balais de moteur à collecteur, à disposer dans le boîtier (1) de moteur et réalisé notamment sous forme de pièce en matière plastique.

4. Moteur électrique suivant la revendication précédente, ayant les caractéristiques suivantes :
f) le connecteur (3) fixe est relié d'un seul tenant au support (3.1) de balais par l'intermédiaire d'un collet (3.2) de liaison ;
g) les connexions entre le support (3.1) de balais d'une part et le connecteur (3) fixe d'autre part, notamment vers des broches (3.7) de connexion du connecteur (3) fixe, sont posées dans le collet (3.2) de liaison, notamment sont coulées dans ce dernier.

5. Moteur électrique suivant la revendication précédente, ayant la caractéristique suivante :
h) le collet (3.2) de liaison est mis en place, en étanchéité à l'humidité vis-à-vis de l'extérieur, dans un évidement axial du boîtier (1) de moteur et/ou du flasque (2).

6. Moteur électrique suivant la revendication 4 ou 5, ayant la caractéristique suivante :
i) le flasque (2) et l'extrémité du boîtier (1) de moteur qui le reçoit sont mutuellement reliés du côté frontal, en incluant la liaison entre le connecteur (3) fixe et le support (3.1) de balais, sous forme de sous-ensemble étanche à l'humidité vis-à-vis de l'extérieur.

7. Moteur électrique suivant au moins une des revendications précédentes, ayant la caractéristique suivante :
j) le connecteur (3) fixe peut être soutenu sur le boîtier (1) de moteur, au sens d'une limitation des vibrations dues aux secousses, par un élément de soutien, notamment par un segment (3.5) déflecteur, avec contre-appui sur le premier organe de soutien, notamment la patte (2.1) de soutien.

8. Moteur électrique suivant la revendication précédente, ayant la caractéristique suivante:
k) le segment (3.5) déflecteur fait partie d'un seul tenant du connecteur (3) fixe.

9. Moteur électrique suivant au moins une des revendications précédentes, ayant la caractéristique suivante :
l) le connecteur (3) fixe peut être chaque fois soutenu avec intercalation d'une couche (7 ; 8) d'amortissement.
